(19) **Europäisches Patentamt**
**European Patent Office**
**Office européen des brevets**

(11) **EP 3 848 859 A1**

(12) **EUROPEAN PATENT APPLICATION**

(43) Date of publication:
14.07.2021 Bulletin 2021/28

(51) Int Cl.:
**G06N 20/00** (2019.01)

(21) Application number: 21150465.9

(22) Date of filing: 07.01.2021

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: 08.01.2020 FI 20205013

(71) Applicant: **Nokia Technologies Oy**
**02610 Espoo (FI)**

(72) Inventors:
• **AKYAMAC, Ahmet**
**Bridgewater, NJ New Jersey 08807 (US)**
• **LEHMANN, Gerald**
**12101 Berlin (DE)**
• **GARG, Yash**
**Tempe, AZ Arizona 85281 (US)**

(74) Representative: **Nokia EPO representatives**
**Nokia Technologies Oy**
**Karakaari 7**
**02610 Espoo (FI)**

(54) **APPARATUS, METHOD, AND SYSTEM FOR PROVIDING A SAMPLE REPRESENTATION FOR EVENT PREDICTION**

(57) An approach is provided for sample representation for event prediction (e.g., a device failure event). The approach, for example, involves determining a random set of sliding time window lengths for processing a sensor data stream (e.g., device health measurements) to detect an event (e.g., device failure). The approach also involves generating sensor data samples based on the random set of the sliding time window lengths. The approach further involves evaluating the data samples based on a quality metric indicating a level of sample cohesion relative to the event. The approach further involves selecting a combination of the sliding time window lengths of the one or more window lengths based on the evaluation. The selected combination of the sliding time window lengths is used to process the sensor data to detect the event (e.g., via machine learning).

FIG. 3

**Description**

BACKGROUND

With the advent of Internet of Things (IoT), streaming sensor data is generated from a very wide variety of devices at different time scales, frequencies, volumes and locations. With the ubiquitous application of IoT to many domains such as telecommunications, industrial, transportation, energy and healthcare, machine learning (ML) and artificial intelligence (AI) based approaches are increasingly employed to generate important insights from the collected data, one of the most important being predictive analytics (i.e., failure or outage prediction) to help maintain healthy and successful service and operations. However, to enable such predictive analytics, device manufacturers and service providers face significant technical challenges with respect to representing or segmenting sensor data streams (e.g., typically asynchronous multi-variate data) in a way that can result in more efficient or accurate analytics.

SOME EXAMPLE EMBODIMENTS

Therefore, there is a need for providing a sample representation of streaming sensor data for event prediction or equivalent analytics.

According to one embodiment, an apparatus comprises at least one processor, and at least one memory including computer program code for one or more computer programs, the at least one memory and the computer program code configured to, with the at least one processor, cause, at least in part, the apparatus to determine a random set of sliding time window lengths of one or more time windows (or other sample parameter such as but not limited to sampling rate) for processing a sensor data stream (e.g., device health measurements) to detect an event (e.g., device failure). The apparatus is also caused to generate of a plurality of sensor data samples based on the random set of the sliding time window lengths and the sensor data stream. The apparatus is further caused to evaluate the plurality of data samples based on a quality metric, wherein the quality metric indicates a level of sample cohesion relative to the event. The apparatus is further caused to select a combination of the sliding time window lengths of the one or more window lengths based on the evaluation. The selected combination of the sliding time window lengths is used to process the sensor data to detect the event.

According to another embodiment, a method comprises determining a random set of sliding time window lengths of one or more time windows (or other sample parameter such as but not limited to sampling rate) for processing a sensor data stream (e.g., device health measurements) to detect an event (e.g., device failure). The method also comprises causing, at least in part, a generation of a plurality of sensor data samples based on the random set of the sliding time window lengths and the sensor data stream. The method further comprises causing, at least in part, an evaluation of the plurality of data samples based on a quality metric, wherein the quality metric indicates a level of sample cohesion relative to the event. The method further comprises selecting a combination of the sliding time window lengths of the one or more window lengths based on the evaluation. The selected combination of the sliding time window lengths is used to process the sensor data to detect the event.

According to another embodiment, a non-transitory computer-readable storage medium carries one or more sequences of one or more instructions which, when executed by one or more processors, cause, at least in part, an apparatus to determine a random set of sliding time window lengths of one or more time windows (or other sample parameter such as but not limited to sampling rate) for processing a sensor data stream (e.g., device health measurements) to detect an event (e.g., device failure). The apparatus is also caused to generate of a plurality of sensor data samples based on the random set of the sliding time window lengths and the sensor data stream. The apparatus is further caused to evaluate the plurality of data samples based on a quality metric, wherein the quality metric indicates a level of sample cohesion relative to the event. The apparatus is further caused to select a combination of the sliding time window lengths of the one or more window lengths based on the evaluation. The selected combination of the sliding time window lengths is used to process the sensor data to detect the event.

According to another embodiment, an apparatus comprises means for determining a random set of sliding time window lengths of one or more time windows (or other sample parameter such as but not limited to sampling rate) for processing a sensor data stream (e.g., device health measurements) to detect an event (e.g., device failure). The apparatus also comprises means for causing, at least in part, a generation of a plurality of sensor data samples based on the random set of the sliding time window lengths and the sensor data stream. The apparatus further comprises means for causing, at least in part, an evaluation of the plurality of data samples based on a quality metric, wherein the quality metric indicates a level of sample cohesion relative to the event. The apparatus further comprises means for selecting a combination of the sliding time window lengths of the one or more window lengths based on the evaluation. The selected combination of the sliding time window lengths is used to process the sensor data to detect the event.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

BRIEF DESCRIPTION OF THE DRAWINGS

The example embodiments of the invention are illustrated by way of example, and not by way of limitation, in the figures of the accompanying drawings:

FIG. 1 is a diagram of a system capable of providing a sample representation for event prediction, according to one embodiment;

FIG. 2 is a diagram of the components of a predictive analytics platform, according to one embodiment;

FIG. 3 is a flowchart of a process for providing a sample representation for event prediction, according to one embodiment;

FIGs. 4A and 4B are diagrams illustrating an example sensor data stream and different types of sliding time windows that can be applied on the sensor data stream, according to one embodiment;

FIG. 5 is a diagram illustrating an example search space for determining sliding time window lengths, according to one embodiment;

FIG. 6 is a diagram illustrating a sample generation process, according to one embodiment;

FIGs. 7A and 7B are diagrams illustrating an example of a sparsely filled search space using a cohesion quality metric for determining a global maxima, according to one embodiment;

FIG. 8 is a diagram illustrating an example of defining a sub-space around a current global maxima, according to one embodiment;

FIG. 9 is a diagram of a user interface for optimizing time windows for event prediction, according to one embodiment;

FIG. 10 is a diagram of hardware that can be used to implement an embodiment;

FIG. 11 is a diagram of a chip set that can be used to implement an embodiment; and

FIG. 12 is a diagram of a mobile terminal (e.g., handset or vehicle or part thereof) that can be used to implement an embodiment.

DESCRIPTION OF SOME EMBODIMENTS

Examples of a method, apparatus, and computer program for providing a sample determination or representation for event prediction are disclosed. In the following description, for the purposes of explanation, numerous specific details are set forth in order to provide a thorough understanding of the example embodiments of the invention. It is apparent, however, to one skilled in the art that the embodiments of the invention may be practiced without these specific details or with an equivalent arrangement. In other instances, structures and devices are shown in block diagram form in order to avoid unnecessarily obscuring the embodiments of the invention.

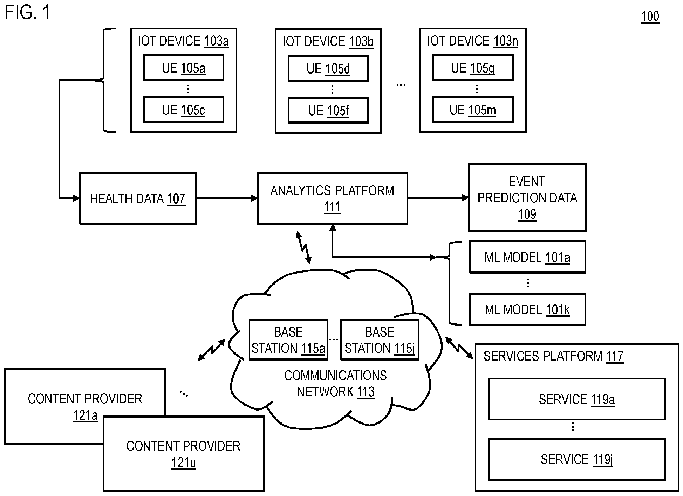

FIG. 1 is a diagram of a system 100, such as an IIoT (Industrial Internet of Things (IIoT)) system, a wireless communication system (e.g. 5G New Radio (5G NR), NB-IoT (Narrowband Internet of Things), LoRaWAN® (Long Range Low-power wide-area network), Low-power Wide-Area Network (LPWAN)), a V2X (Vehicle-to-Everything) system, a vehicle, or any combination thereof, capable of determining or providing a sample representation for event prediction, according to one example embodiment. In one embodiment, predictive analytics (e.g., via artificial intelligence (AI)/machine learning (ML)) in any communication system, e.g. in a wireless telecommunication system or an Internet of Things (IoT) system, is concerned with finding patterns in collected data and/or streaming data, such as telecom equipment data, sensor data and/or IoT data, that has certain one or more patterns, actions, events, which can have certain mutual and/or relative correlations, and could be indicators of impending or future outages, service disruptions, failures, and/or reasons for the failures/outages/disruptions. As such, predictive analytics use historically collected sensor data to create rules and patterns to generate predictive models (e.g., ML models 101a-101k, also collectively referred to as ML models 101) that can be deployed in the field.

For example, the sources of this data can include but are not limited to: (1) one or more sensor readings from one or more IoT systems comprising one or more IoT devices 103a-103n respectively equipped with one or more user equipment (UE) devices or sensor devices 105a-105m, and (2) reports of failures or outages (which may be contained as part of the sensor data or provided separately). These sources are collectively referred to herein as health data 107. In one embodiment, the health data 107 can be recorded as multivariate time series data. One task in predictive analytics is to associate patterns in input data (e.g., sensor reading streams) with the events that are to be predicted themselves (e.g., device failure events or device operating normally for device health monitoring under the IoT or equivalent domain represented as event prediction data 109). This association task is often quite technically challenging, as IoT sensor data is collected at diverse time scales, volumes and manners - e.g., synchronously (e.g. at a fixed sampling rate) or asynchronously (e.g., more event-driven).

Thus, one technical challenge involves preparing the collected data and/or streaming data, e.g. the sensor data, to capture the most meaningful samples to create positive and negative training examples for AI/ML activities (e.g., positive samples refer to sensor readings that preceded failures, and negative samples refer to reading that did not precede failures). The one or more sensor readings themselves may be temporally separated from the consequent one or more failure events (or other event to be predicted), and the application may require predictions to be made sufficiently in advance for proactive repairs (or other pre-event action) to be enacted. In traditional systems, the decisions of which sensor data to collect, how much data to collect, and how far in advance predictions can be made are arrived by heavy reliance on domain expertise. This process is usually repeated at the beginning of every project, and comprises a significant amount of the project time, effort and cost. One preparation step is the creation of data-batches from continuously recorded time series data (e.g., such as the sensor data stream collected as health data 107 from IoT devices 103). The size of the batches (often called time windows) is decisive, as this can help separate non-relevant and relevant data with regards to the targeted failure predictions. For example, including non-relevant data in predictive analytics can unnecessarily waste computer resources (e.g., processing power, memory, bandwidth, etc.) for processing the non-relevant data.

To address these technical challenges, the system 100 of FIG. 1 introduces a capability to perform data preparation and event prediction (e.g., device failure prediction in an IoT domain or equivalent) from multi-variate asynchronous streaming data (e.g., streaming sensor data monitored from IoT devices 103) using a process that prepares and transforms the streaming data into a rich representation that is suited for downstream AI/ML analytics. In one embodiment, the system 100 can search over different sample representation parameters such as but not limited to sliding windows, sampling rates, and/or the like. Finding the optimal window lengths has long been a process that is heavily reliant on inputs from domain-experts. In one embodiment, the system 100 provides a constrained process, e.g. due to limited computational resources on processing power and/or memory resources, that determines the length of the sliding window (or other sample representation parameter value such as sampling rate) using one or more ML models, e.g. budgeted or lean ML models, as a measure of feedback for the quality (e.g., a quality metric) of windows size/sample representation parameter value, and an another ML model (e.g. an exhaustive model) for the test of optimality. By way of example, an exhaustive ML model is a model that has been trained without a budget or cost constraint. In an embodiment in which cost is a concern or a parameter for consideration, the use of budgeted versus exhaustive ML models can enable the system 100 more efficiently or economically measure quality resulting from various window size combinations without having to exhaustively train an ML model for each combination. The exhaustive ML model can then be trained for just the combination(s) of window sizes with that meet quality criteria.

More specifically, in one embodiment, through the establishment and exploration of a search space of window sizes (or other sample representation parameter values) defined by multiple hyper-parameters, the system 100 (e.g., via analytics platform 111) uses one or more first ML applications/algorithms, such as budgeted or small scale ML, iterates through this space using feedback from the ML outputs, determines optimal hyper-parameters that will result in effective event predictions (e.g., device failure event predictions), and runs one or more second ML applications/algorithms, such as full scale ML models, to create failure prediction models and/or failure recognition models for root cause analysis - all without the need for domain expertise or prior information about the contents or characteristics of related data streams.

The various embodiments described herein provide for several technical advantages including but not limited to:

- Data-Adaptive: The non-parametric nature of embodiments described herein provide a data-adaptive approach, obviating the expert input in understanding the data compared to the traditional approaches that often require extensive expert input in data preparation and training optimized configurations of ML models.

- ML-Invariant Sampling: The embodiments described herein are agnostic to the downstream ML model. In other words, to determine an ML-compatible sample representation, the embodiments described herein do not rely on the performance of a particular ML model. Instead, the embodiments use measures such as, but not limited to, cohesion and separation between the (label) classes as a whole.

- Data-Driven Search Space Extraction: The embodiments described herein minimize the involvement of experts in defining the window lengths or other sample representation parameter values (e.g., sampling rates) to generate the batch of data for predictive analytics. In the embodiments described herein, the search for optimal sample representation parameter values (e.g., window lengths, sampling rates, etc.) is performed using a search space (e.g., a hyper-space for window lengths) generated by automatically extracting salient characteristics of the data as opposed to the space being defined manually by an expert.

- Fast Randomized Search: In the embodiments described herein, the hyper-parameter search strategy involves randomly drawing a limited number of candidate window lengths (or other sample representation parameter values) from a data-driven search space to determine the optimal window length or sampling , and then iteratively updates the search around the determined global maximum. This both increases the speed of the convergence process and avoids being trapped into local maxima.

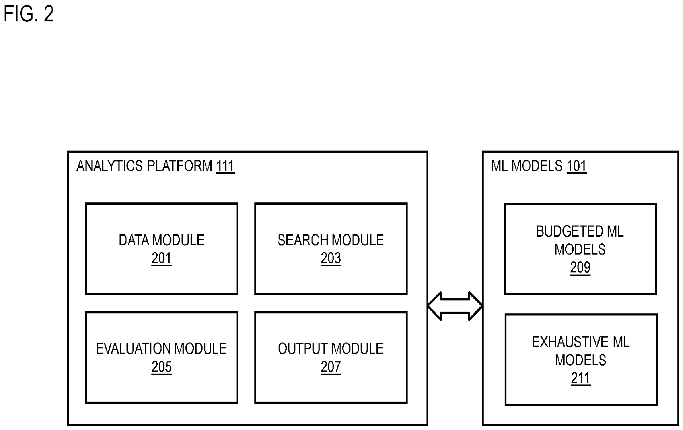

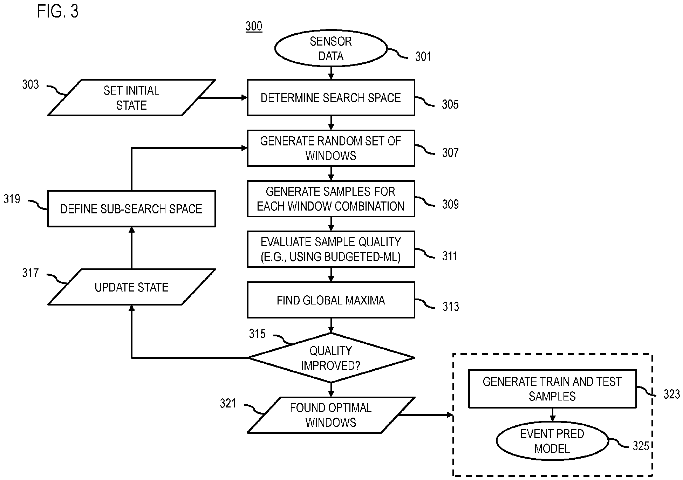

In one example embodiment, the analytics platform 111 includes one or more components for providing sample representation for event prediction according to the various example embodiments described herein. As shown in FIG. 2, the analytics platform 111 includes a data module 201, a search module 203, an evaluation module 205, and an output module 207. These modules 201-207, in turn, can interact with one or more ML models 101 comprising budgeted ML models 209 and/or exhaustive ML models 211. The above presented modules and components of the analytics platform 111 can be implemented in hardware, firmware, software, or a combination thereof. It is contemplated that the functions of these components may be combined or performed by other components of equivalent functionality. Though depicted as a separate entity in FIG. 1, it is contemplated that the analytics platform 111 may be implemented as a module of any of the components of the system 100 (e.g., in a component of a communications network 113 such as a base station 115a-115i or any communication network device/equipment, in a services platform 117 that uses predictive analytics, in one or more services 119a-119j of the services platform 117, in service 119, in content provider 121a-121u, and/or in an IoT device 103a-103n, a vehicle electronic control unit (ECU), etc. or any combination thereof). In another embodiment, the analytics platform 111 and/or one or more of the modules 201-207 may be implemented as a cloud-based service, local service, native application, or combination thereof. In one alternative embodiment, the one or more ML models (101a through 101k) are implemented in the analytics platform (111) entity, that is located in the communication network 113. This way, the health data 107 and/or the even prediction data 109 are also communicated via the communication network 113. The functions of these modules are discussed with respect to FIGs. 3-9 below.

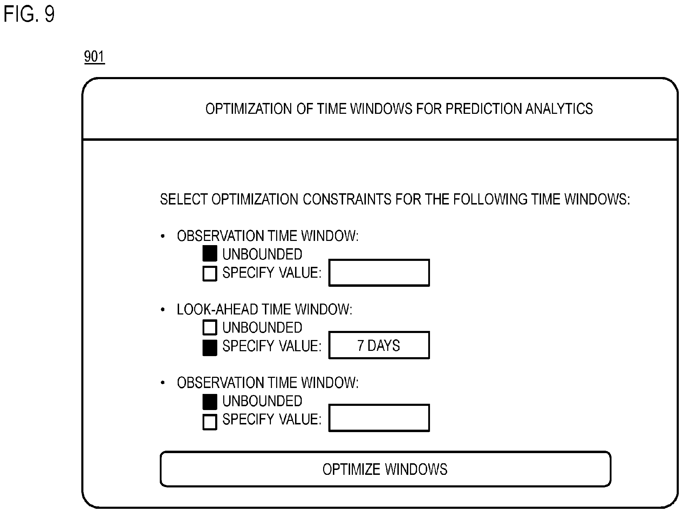

FIG. 3 is a flowchart of a process for providing device health estimation, according to one example embodiment. In various embodiments, the analytics platform 111, any of the modules 201-207 of the analytics platform 111 may perform one or more portions of the process 300 and may be implemented in, for instance, a chip set including a processor and a memory as shown in FIG. 9. As such, the analytics platform 111 and any of the modules 201-207 can provide means for accomplishing various parts of the process 300, as well as means for accomplishing embodiments of other processes described herein in conjunction with other components of the system 100. Although the process 300 is illustrated and described as a sequence of steps, its contemplated that various embodiments of the process 300 may be performed in any order or combination and need not include all of the illustrated steps.

In one embodiment, the process 300 represents at least part of a data processing pipeline for using collected and/or streaming sensor data (e.g., health data 107 data collected from IoT devices 103) to predict events (e.g., device failures) using predictive analytics (e.g., based on AI/ML). Accordingly, in step 301 of the process 300, the analytics platform 111, such as the data module 201, receives or otherwise accesses the collected and/or streaming sensor data. In one embodiment, sensor data is an asynchronous stream that pairs sensor readings with events called data points. These data points can be one-dimensional or multi-dimensional. As used herein, a sensor reading is the observed value/behavior of an attribute at a given point in time, and an event is the behavior that the sensor reading represents.

The sensor data relates to operational data on hardware (HW) components of 103, such as IoT devices 103, which can degrade over time and lead to eventual failure. Examples of these components include but are not limited to the following:

- Crystal oscillator - This component has an aging related frequency drift which is typically specified by the manufacturer in parts per million (ppm) per year. This aging related frequency drift typically decreases over time. This aging related frequency drift can lead to longer synchronization time during cell selection.

- Flash memory - This component typically has a maximum number of write cycles specified by the manufacturer. However, the spread of errors is not uniform across all its pages. Pages which are written often will degrade faster than those which are written to seldomly.

- Power amplifier (PA) - When subj ected to high voltage and temperature the transistors (BJT or MOSFET) in the PA are subjected to stress which over time result in permanent loss of gain. Consequently, the gain curve of the PA becomes more non-linear over time.

- Low noise amplifier (LNA) - Similar to PA, when subjected to temperature and voltage (although much lower than PA), the LNA might also show reduced gain and more importantly its Noise Figure might degrade.

- Surface Acoustic Wave (SAW) filters - Over time when subjected to high radio-frequency (RF) power, the attenuation of these filters increases.

- Battery and associated circuits - With time, battery impedance increases. At the same time, if exposed to low temperatures and moisture, the associated circuitry can corrode, and this will also result in an increase in impedance. In addition, capacitors, especially class 2 or lower, will age and their capacitance will decrease with time. This can result in ripples in the input voltage to various components that can lead to degraded performance or failure.

In one embodiment, the parameters to include in the sensor data include one or more parameters to be measured for determining the health of the HW components of the UEs 105 and/or IoT devices 103 such as, but not limited to, the components described above. In one embodiment, the health parameters can be measured periodically by device (e.g., IoT device 103) for each of its one or more UEs 105 to generate streaming sensor data for processing by the analytics platform 111. Examples of the health parameters to monitor include, but are not limited to:

- Number of writes, percentage of bad pages in the flash memory;

- Temperature measurement averaged over certain time period;

- Humidity measurement averaged over certain time period;

- Crystal's aging related frequency drift;

- Error Vector Magnitude (EVM) of the transmission (Tx) Chain at maximum transmit power;

- Bit Error Rate (BER) or Block Error Rate (BLER) of a reception (Rx) chain;

- Stable voltage level, increased impedance, change in capacitance, as well as ripples in transient voltage when the power amplifier, baseband processor, and other similar components are turned on at full power.

- Loss or reduce of gain in the power amplifier (PA) or low noise amplifier (LNA);

- Increased battery impedance;

- Decreased capacitance of capacitors; and

- Increased attenuation of Surface Acoustic Wave (SAW) filters.

Based on the actual design of the UE 105, the system 100 can monitor a subset of these input parameters. Furthermore, the system 100 can also have a superset containing the input parameters identified above in addition to other device health related parameters. It is further contemplated that any other health related parameters relevant to the UE 105 and/or IoT device 103 can be used according to the embodiments herein. In some example embodiments, one or more IoT sensors, e.g. the IoT devices 103 and/or the UE 105 devices, can be used a variety of use cases including but not limited to industrial, factory, and/or transportation domains. In particular, the one or more IoT sensors may include one or more sensors for collecting sensor data in scenarios such as but not limited to:

- One or more IoT sensors monitoring an industrial process can collect data relating to environmental, process and/or electro-mechanical data, such as ambient temperature, density, viscosity, noise, humidity, heat, flow rate, velocity, operating rpm, voltage, current, power, energy consumption, status/position of valve, actuator, solenoid, relay, etc. or any combination thereof.

- Further, one or more sensors, such IoT sensors, can monitor a process and function of a vehicle or a system of vehicles (sometimes defined as vehicle-to-vehicle system (V2V)), and collect related sensor data, e.g. temperature, noise, humidity, heat, flow rate, velocity, acceleration, steering, breaking power, friction, density, viscosity, operating rpm, voltage, current, power, energy consumption, fuel consumption, tire pressure, status/position of valve, actuator, solenoid, relay, etc. or any combination thereof.

- Additionally, one or more sensors, such IoT sensors, can monitor a process and function of a city/community (sometimes defined as "smart city") and collect related sensor data, e.g. temperature, noise, humidity, heat, weather, flooding, flow rate of traffic, velocity of traffic, density of traffic, road friction, voltage, current, power, energy consumption, status/position of valve, actuator, solenoid, relay, etc. or any combination thereof.

- Further, one or more sensors, such IoT sensors, can monitor a process and function of a vehicle or a system of vehicles (as described above) in or with a specific environment (e.g. "smart city" as described above), sometimes defined as vehicle-to-infrastructure or vehicle-to-everything (V2X) system.

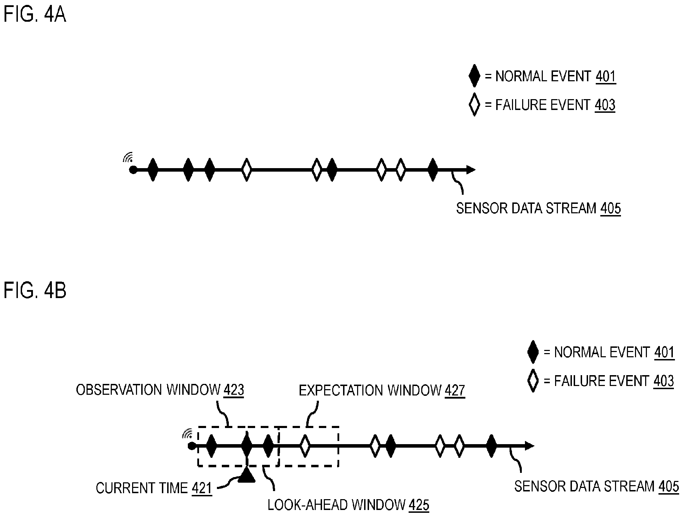

FIG. 4A illustrates an abstract example of a sensor data stream 401 with the diamonds representing associated data points and the shading of the diamonds representing the label/alert/event/etc. the sensor reading represents. For example, in the context of domain of device health monitoring, an event can be a normal operation event 401 or a failure event 403 of an IoT device 103. As discussed above, it is technically challenging to map the one or more data readings to the one or more sensor events and/or to one or more system failures in an asynchronous time series such as the sensor data stream 401. To overcome this problem, in one embodiment, various combinations of different types of sliding time windows can be used to intelligently understand and map the relationship between the past observations and events at any given timestamp. A sliding window is a designated period of time relative to a fixed given time (e.g., the current time) that is used to select a portion of the sensor data stream. For example, a typical sliding window may cover a designated period of time (e.g., 10 minutes into the past or the future) from the current or other specified time. This means that any sensor readings or data points occurring within that period of time (e.g., 10-minute period) will be included in the window. As time continues to pass, the window also moves or "slides" with the passage of time so that older sensor readings/data points (e.g., older than the length of the time window) move out the window as newer readings/data points move in.

Depending on the application or use domain of the predictive analytics, different time windows and/or number of time windows can be used. FIG. 4B illustrates an example embodiment that includes three sliding window types for predicting events from sensor readings, according to one embodiment. As shown, the black triangle represents a given or current time 421, the first dashed rectangle represents an observation time window 423, the second dashed rectangle represents a look-ahead window 425, and the third dashed rectangle represents an expectation window 427. These windows are discussed in more detail below:

- In one embodiment, the Observation Window ($O_W$) 423 is the amount of time series data (e.g., batch of data of the sensor data stream 405) to use for observing patterns. The observed patterns, for instance, (or e.g. characteristics derived from the time series data or any combination of these) can be used as input features to train or to use the ML model 101 (or equivalent predictive algorithm) for predicting events. In one embodiment, the length of the observation window 423 can be defined using 2 temporal pivots (e.g., Start Time ($T_s$) and Cut-Off Time ($T_c$)). By way of example, the Start-Time ($T_s$) is assumed to the timestamp of the first recorded observation, and the Cut-Off ($T_c$) time is the amount of the time in past to consider. It is noted that the Observation Windows 423 need not be referenced to the present time (e.g., occurring within the last 10 minutes of the current time), but can also be referenced to any designated time (e.g., occurring within 10 minutes of a designated time other than the present or current time).

- In one embodiment, the Look-Ahead Window ($L_W$) 425 represents how far ahead in the future that the downstream ML algorithms should predict an event to provide a time gap between the when patterns observed to when events should be predicted from the patterns. For example, when predictive analytics are used to predict events that for which an action can be initiate, the time gap can be used to facilitate resource allocation to take the action. For example, in a device health monitoring use case (e.g., IoT scenario), the time afforded by the Look-Ahead 425 can used to initiate predictive maintenance to delay or avoid a predicted device failure event.

- In one embodiment, the Expectation Window ($E_W$) 427 is the temporal window in which the target/expected event is to be predicted. Thus, the Expectation Window 427 allows for determining the event(s) associated with the readings/patterns extracted using the Observation Window 423 - allowing for supervised training of the downstream ML algorithm.

Although the embodiments of the windows 423-427 above are described with respective to predicting events occurring in the future (e.g., the Look-Ahead Window 425 and Expectation Window 427 occur after the Observation Window 425), it is contemplated that the time windows can be selected for predicting events occurring in the past. In other words, in some embodiments, the Look-Ahead Window 425 can be a Look-Behind Window such that observation data collected during the Observation Window 423 can be used to predictions of events that may have happened in the past. Thus, in one embodiment, the Observation Window 423 can be used for predictions of future events (e.g., predictive diagnostics) or predictions of past events (e.g., forensic diagnostics). In other words, the Look-Ahead Window 425 and Look-Behind Window can be functionally identical in the embodiments described with the exception that the Look-Ahead Window 425 occurs later in time than the Observation Window 423 while the Look-Behind Window occurs earlier in time than the Observation Window 425. In some instances, the Look-Ahead Window and/or the Look-Behind Window can also have a length of zero. This is different to the Observation Window, which length is > 0, i.e. it covers at least one data sample.

In one embodiment, in step 303, the data module 201 can also set the initial state by initializing one or more variables to be used for optimizing the sample representation process according to the embodiments described herein. Examples of these variables include, but are not limited to:

- Number of iterations ($I_{max}$) to perform: In one embodiment, the maximum of number of iterations ($I_{max}$) can be set to limit the iterative computation of the optimized sample representation parameters (e.g., time windows, sampling rate, etc.). For example, $I_{max}$ can be set to a maximum of 5 iterations as follows: initial iteration ($I_{init}$) <- 0 and $I_{max} \leftarrow 5$.

- Maximum observed quality measure or metric ($Q_{max}$): In one embodiment, the initial quality measure $Q_{max}$ can be set to negative infinity or some other designated low number as follows: $Q_{max} \leftarrow -\infty$. This allows for the sample representation optimization process to update $Q_{max}$ to update sample quality as the dataset is processed.

- Optimal window length ($W_o$): In one embodiment, the initial window length ($W_o$) for each time window to optimize can be set to null as follows: $W_o \leftarrow \emptyset$. This allows for the sample representation optimization process to update $W_o$ to update the window lengths as the dataset is processed.

In step 305, the analytics platform 111, such as the search module 203, determines a search space for optimizing the selected time windows and/or other sample representation parameters. As discussed above, one conventional approach to defining the bounds of the search space heavily depends on the input from the domain expert. In contrast, the embodiments described herein provide a data-driven approach to determining the search space to advantageously reduce the resource burden and requirement for input from a domain expert. In one embodiment, the analytics platform 111, e.g. the search module 203, defines a search space $\mathbb{S}$ for determining the length of sliding windows as a unique set of absolute difference between two adjacent timestamps as follows:

$$\mathbb{S} = \{|T_i - T_{i+1}|, \forall\, i \in 1 \dots (N-1)\}$$

where, $N = |T|$ is the number of timestamps in the multi-variate time-series.

In one embodiment, the search space $\mathbb{S}$ in each dimension is defined as a function of the length of time between two observed historical data points. In one embodiment, each dimension corresponds to a respective time window (e.g., observation window, look-ahead window, look-behind window, expectation window, etc.). In one embodiment, this particular initialization heuristic can be used to inform the search space $\mathbb{S}$ with the inherent characteristics of the data opposed to exhaustively searching through all possible window lengths. In addition, indices $\mathbb{S}_i$ in the search space $\mathbb{S}$ refer to the sorted version, with $\mathbb{S}_1$ being the minimum time difference and $\mathbb{S}_N$ being the maximum (the maximum can cover multiple smaller time windows). In some use cases, the look-ahead-window and the look-behind-window could also have a length of zero. This is different to the observation window, its length is > 0, so that it covers at least one data sample.

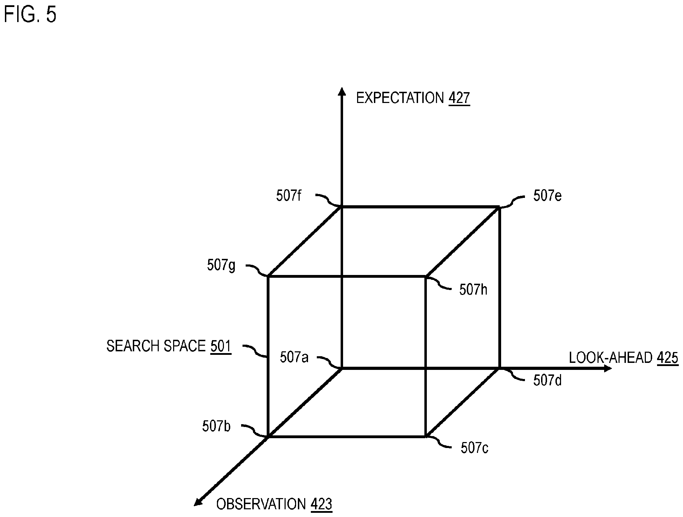

FIG. 5 illustrates an example search space $\mathbb{S}$ in a Cartesian arrangement (e.g., each axis or dimension representing a different temporal window) for searching window length. In this example, the overall search space < $\mathbb{S}$ > 501 is defined as a three-dimensional space, where each dimension represents respective window lengths of the observation window 423, look-ahead window 425, and expectation window 427. In each dimension, $\mathbb{S}_j$ defines the sorted temporal distances between observations. Using the window length as a function temporal distance can prevent the data from being over summarized in a given window. For example, if a long window length is used for the historical data observed at very short intervals of time (frequently), this might lead to a large number of events being summarized in a single window, and on the other side of the spectrum, when short window lengths are used, and the data is observed at large time steps, it would lead to empty windows. Furthermore, the data-driven window length sampling will allow for data-appropriate window lengths without the need for domain expertise or user input.

As shown in FIG. 5, the vertices of the cube formed by the search space $\mathbb{S}$ 501 according to the initialization heuristic described above is illustrated in Table 1 below (e.g., coordinates of the vertices are described with respect to the indices $\mathbb{S}_i$).

**Table 1**

| Vertex 507a | $\langle \mathbb{S}_1, \mathbb{S}_1, \mathbb{S}_1 \rangle$ |
|---|---|
| Vertex 507b | $\langle \mathbb{S}_{N-1}, \mathbb{S}_1, \mathbb{S}_1 \rangle$ |
| Vertex 507c | $\langle \mathbb{S}_{N-1}, \mathbb{S}_{N-1}, \mathbb{S}_1 \rangle$ |
| Vertex 507d | $\langle \mathbb{S}_1, \mathbb{S}_{N-1}, \mathbb{S}_1 \rangle$ |
| Vertex 507d | $\langle \mathbb{S}_1, \mathbb{S}_{N-1}, \mathbb{S}_{N-1} \rangle$ |
| Vertex 507e | $\langle \mathbb{S}_1, \mathbb{S}_1, \mathbb{S}_{N-1} \rangle$ |
| Vertex 507f | $\langle \mathbb{S}_{N-1}, \mathbb{S}_1, \mathbb{S}_{N-1} \rangle$ |

(continued)

| Vertex 507g | $\langle \mathbb{S}_{N-1}, \mathbb{S}_{N-1}, \mathbb{S}_{N-1} \rangle$ |
|---|---|

Although the embodiments and examples of a search space $\mathbb{S}$ described above are discussed with respect to a three-dimensional search space, it is contemplated that the search space $\mathbb{S}$ may include more or fewer dimensions depending on the number of sliding windows and/or sample representation parameters that are being optimized. Accordingly, the analytics platform 111, e.g. the evaluation module 205, can cause, at least in part, a generation of any N-dimensional search space. In this case, N is the number time windows that are to be processed. For example, if only the observation window 423 and Expectation window 427 are selected, then the search space $\mathbb{S}$ can be a two dimensional search space. In yet another embodiment, the search module 203 can receive an input (e.g., from a user) for specifying a constraint value or bounds to apply to one or more of the window lengths being evaluated. For example, if a user specifies that the look-ahead window can be no shorter than 7 days (e.g., a minimum number of days that the user needs to allocate resources to address a predicted event), then the input can be used as a constraint on the search (e.g., by eliminating a search of the portion of the search space $\mathbb{S}$ with observation window lengths less than 7 days).

In step 307, the analytics platform 111, e.g. the evaluation module 205 determines a random set of sliding time window lengths of one or more time windows for processing a sensor data stream to detect an event. The random set of sliding time windows can be determined based on the N-dimensional or three dimensional search space. In other words, following the definition of the search space according to the embodiments above, the evaluation module 205 creates a set, $W_s$, of window lengths by randomly sampling the search space defined using the set of possible window length combinations ($\mathbb{S}$), i.e. $(N-1)^n$ or $|\mathbb{S}|^n$, where $n$ is the number of the windows being evaluated (e.g., in the case of evaluating the observation window 423, look-ahead window 425, and expectation window 427, the number of windows is three - $n = 3$). By way of example, a random combination of the window lengths for three windows can be represented as a triplet (e.g., <observation window length, look-ahead window length, expectation window length>).

In step 309, the analytics platform 111, e.g. the evaluation module 205, then generates samples from the sensor data stream based on set of possible window length combinations. In other words, the evaluation module 205 causes, at least in part, a generation of a plurality of sensor data samples based on the random set of the sliding time window lengths and the sensor data stream. In one embodiment, a sample is defined as a data structure that can summarize (aggregate) the data readings (along time) for the random combination of windows lengths (e.g., random length combinations for the sensor readings in observation window 423 and the events in the expectation window 427 - e.g., prediction window - that are separated by the look-ahead window 425). The data representation of the sample, for instance, is reusable across any preferred downstream AI/ML model 101.

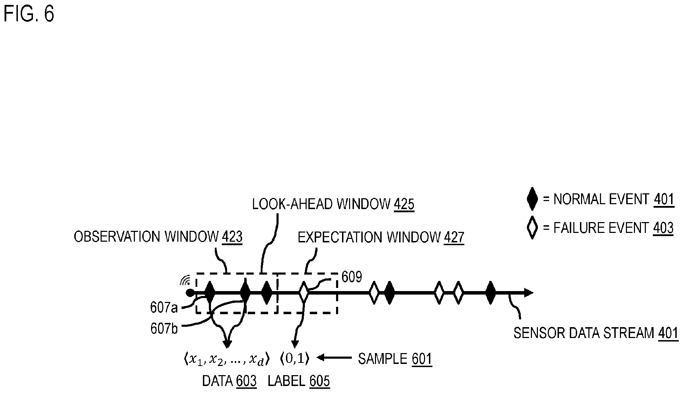

In one example embodiment, the analytics platform 111, e.g. the evaluation module 205, uses a step-by-sample strategy to generate a new sample for every observation in the time-series (e.g., sensor data stream). A step-by-sample strategy maps the observation (e.g., a sensor reading-event pair) to a sample 601 comprising data 603 and a corresponding label 605 as shown in FIG. 6. FIG. 6 also illustrates that there can be multiple observations (e.g., indicated by the two black diamonds) in a given observation window 423. The evaluation module 205 can then employ one or more aggregation functions to represent multiple observations in a condensed, representative observation. An example of this aggregation function is illustrated in FIG. 6 in which the two observations 607a and 607b in the observation window 423 are condensed in a data structure (e.g., $\langle x_1, x_2, ..., x_d \rangle$) where $x_1$-$x_d$ represent data elements from the observations 607a and 607b that have been transformed by the aggregation function. Furthermore, in one embodiment, the evaluation module 205 can use a multi-hot label definition (e.g., a mixed binary representation including 0 and 1 such as (0,1) to represent the event(s) 609 present in the prediction window 427.

In step 311, the analytics platform 111, e.g. the evaluation module 205, causes, at least in part, an evaluation of the plurality of data samples based on a quality metric. By way of example, the quality metric indicates a level of sample cohesion relative to the event. In one embodiment, the evaluation module 205 evaluates the sample quality of the samples generated according to the embodiments of step 307 using, for instance, a budgeted ML or resource efficient ML. By way of example, budgeted ML trains an ML model 101 under a certain budget constraint (e.g., cost and/or computing resource constraint), and then tries to achieve the highest prediction accuracy while meeting the constraint. In other words, a budgeted ML approach balances prediction accuracy against prediction cost. In contrast, training a full-scale ML model can be a lengthy and resource intensive process. Therefore, in one embodiment, the evaluation module 205 can use a budgeted-ML process that can summarize the overall quality, Q, of the samples generated. However, it is noted that in use cases where there is no resource constraint, the evaluation module 205 can use a full-scale ML model to summary the quality of the samples generated. This ML process (e.g., budgeted or full-scale ML) is applied to the random set of window lengths determined, for instance, according to the embodiments of step 305 above.

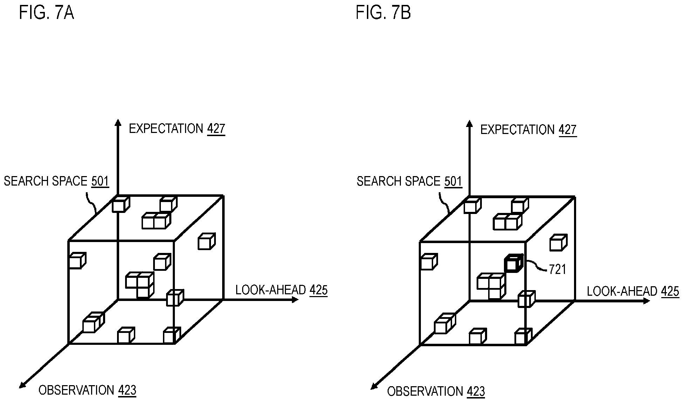

FIG. 7A continues the example search space 501 of FIG. 5 with the added depiction of the random sets of window lengths generated according to step 305. For example, as shown, within the search space 501, each random combination of window lengths (e.g., observation window length, look-ahead window length, and expectation window length) is represented as a cube within the search space 501. Each cube is positioned in the search space 501 according to its respective window length values max to axes representing the lengths of the observation window 423, look-ahead window 425, and expectation window 427. Then for each combination of window lengths, the corresponding samples generated for the combination can be evaluated to determine the Quality metric specific to the combination of the observation, look-ahead, and expectation window lengths denoted by $Q_{\langle O,L,E \rangle}$.

In one embodiment, the value for each quality measure or metric can be computed as follows:

$$Q_{\langle O,L,E \rangle} = \frac{1}{C} \sum_{i=1}^{C} \frac{1}{n_i} \sum_{j=1}^{n_i} |x_j - c_i|$$

where, $Q_{\langle O,L,E \rangle}$ is the sample quality measure for given window lengths. In one embodiment, $Q$ measures the cohesion of individual samples to other samples representing the same event. Here, $C$ is the number of unique events, $n_i$ is the number of samples representing the $i^{th}$ event, and $c_i$ is the overall event representative. By way of example, $c_i$ can be the average of all the samples representing the $i^{th}$ event. The average is presented here as one example of a summary statistic for representing all the samples associated with a combination of window lengths. However, it is contemplated that any statistical measure or equivalent (e.g., median, minimum, maximum, standard deviation, etc.) can be used according to the embodiments described herein.

While FIG. 7A illustrates the sparsely filled search space 501, FIG. 7B illustrates an example in which the quality measure or metric $Q_{\langle O,L,E \rangle}$ (e.g., a cluster cohesion quality measure) is used to determine the global maxima of the quality measure of the sparsely filled search space 501 (step 313). In this case, the combination of window lengths that is associated with samples having the highest quality measure $Q_{\langle O,L,E \rangle}$ among the sparse random combinations is designated as the current global maxima. This current maxima is illustrated as a cube 721 within the search space 501 highlighted with thick lines in FIG. 7B.

In one embodiment, given the number of unique events C the system 100 may be used to detect, the evaluation module 205 can learn a generalized representation $c_i$ for each event $i$ based on the observed historical data ($x$), and then represent the event by taking an average representation of all the observations (or any other equivalent summary statistic). In this notation, $C$ is the number of unique events which are iterated using the index $i$ (e.g., the number of iterations set at the beginning of the process as described above). Then, $c_i$ is a representative for all the $n_i$ events. In one embodiment, this is the budgeted ML part, as the evaluation module 205 is not using an ML model 101 that considers each event individually, but representing all events by the average or other summary. However, the quality of this representation depends on how far the true observations are from the event representative. Accordingly, the evaluation module 205 can use a quality measure $Q$ that measures cluster cohesion, which measures the divergence of the true observations from their representative. In one embodiment, a tighter cohesion (higher value) is preferred over a looser one. In other words, a tighter cohesion is used to indicate higher quality relative to a looser cohesion.

To extract the global maxima, the evaluation module can use optimization criteria as described in the embodiments below. For example, in this step, the analytics platform 111, e.g. the evaluation module 205, determines the set of window lengths (e.g., observation, look-ahead, and expectation window lengths), from the randomly generated set of window lengths, S, that provides the most cohesion among the samples representing the same event.

$$Q_m, idx = argmax\,(S)$$

where, $S$ represents the sparsely filled search space, $Q_m$ is the current global maxima of the sparse space, and $idx$ represents the location of the current optimal window lengths in the search space. As indicated above, the current maxima is illustrated as cube 721 in FIG. 7B.

In step 315, the analytics platform 111, e.g. the evaluation module 205, can determine whether the process has resulted in determining a combination of window lengths that improves quality (e.g., relative to a threshold to a current quality maxima). In one embodiment, the evaluation module 205 defines the condition to decide if the search for the global maxima has converged or whether the analytics platform 111 should generate more samples for further iterative search. Table 2 below illustrates example pseudocode for this decision making process.

> while $I_{init} < I_{max}$ and $Q_m < Q_{max}$
>
> $\quad I_{init} \leftarrow I_{init} + 1$ (Update initial state defining iterations per step 317)
>
> $\quad Q_{max} \leftarrow Q_m$
>
> $\quad$ Update Sub-Space around $i$ (As described in step 319 below)
>
> end

## Table 2

According to the pseudocode in Table 2, the evaluation module 205 iteratively searches through increasingly smaller sub-search spaces to find new combinations of window lengths with the highest quality metric until a maximum number of iterations is reached. In one embodiment, this maximum number is specified during the initialization of the process as previously described.

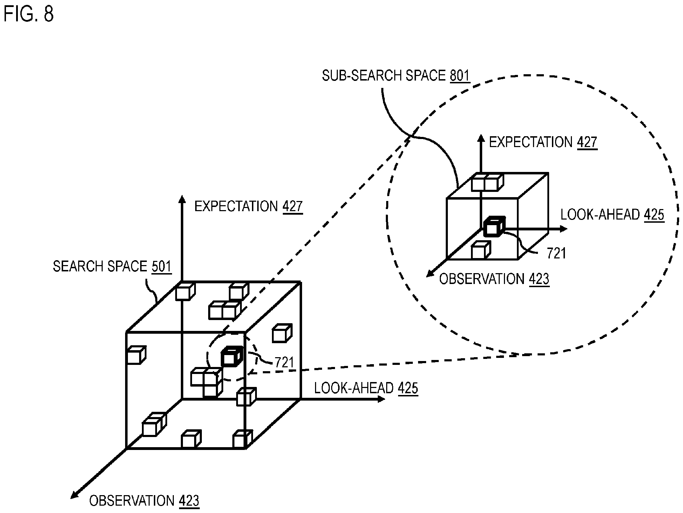

In step 319, following the determination of the new candidate combination of window lengths that provides the maximum cohesion between the samples representing the same event, the analytics platform 111, e.g. the evaluation module 205, can further search in the proximity of the current global maxima. As shown in FIG. 8, the current global maxima is represented by cube 721 in search space 501. The evaluation module 205 can then determine a sub-search space 801 within proximity of cube 721. The sub-search space 801 occupies a subset of the parent search space 501. The evaluation module 205 can then randomly sample around the current global maxima, $Q_{max}$, in the sub-search space 801 (e.g., by returning to step 307).

In step 321, the analytics platform 111, e.g. the evaluation module 205, determines the optimal window lengths based on the quality metric or measure. For example, once the search for optimal window converges, the variable $i$ represents the position of optimal windows lengths in the search space. Therefore, the optimal window can be set to the combination of window lengths represented by the index as follows:

$$W_o = \langle O_{idx}, L_{idx}, E_{idx} \rangle$$

where $W_o$ is the optimal window length, $O_{idx}$ is the observation window length indicated at index *idx*, $L_{idx}$ is the look-ahead window length indicated at index *idx*, and $E_{idx}$ is the expectation window length indicated at index *idx*.

In one embodiment, the search for the optimal window lengths (or other sample representation parameter values) attempts to maximize the sample quality metric (e.g., described in the embodiments of step 311 above) on the hypercube defined by the window lengths. In some cases, processing each candidate combination of window lengths (e.g., triplet of observation, look-ahead, and expectation window lengths) can still be an expensive process, even when performed using budgeted ML. In embodiments that seek to avoid such processing, the analytics platform 111, e.g. the evaluation module 205, can apply a heuristic solution that starts with a set of random selections (thus, several options) for the triplet of window lengths, and identifying progressively smaller hypercubes around the current optimum found. In one embodiment, the initial hypercube can be defined based on observations from historical data, so random selections on this hypercube to start the process and even local maxima are already meaningful in the context of the data. The shrinking heuristic is based on the observation that perturbations to locally optimal window lengths will have the effect of adding or removing observations that can lead to an improvement in the quality metric. The selection of more random selections to begin with, or subsequent trials starting with a new set of random selections can be made, but this approach is weighed against the cost/time of calculating the quality metric.

Note that the data-driven process operates on historical data to find the optimal window sizes or length for a given or selected event type. For example, in a device failure use case, predicted event types can include but are not limited to a system outage, shutdown, component failure, etc. In one embodiment, these findings can be used to define the data relationships (e.g., through windows) to run a separate AI/ML process for event prediction for a given event type (e.g., failure prediction for that selected failure type). The evaluation module 205, for instance, can optimize the window length so that all relevant failure mechanisms that lead to the selected failure type are captured. The applied ML should then be able to build an ML model 101 considering all independent failure mechanisms (root causes) for the selected failure type. In other words, a window length capturing causes can then produce a better validation and prediction performance.

On the other hand, different failure types (or event types in general) can have different characteristics (e.g.,

some are manifested faster, some have acute markers vs. others that have longer-term markers, etc.). Thus, in one embodiment, the process for providing sample representation for event prediction can be re-run separately for different event or failure types to increase prediction accuracy.

In step 323, once the optimal window lengths have been extracted, the asynchronous time series observations (e.g., sensor data stream) are transformed into samples, e.g. the event prediction data 109, extracted using the optimal window lengths. In one embodiment, the samples are then further split into training and testing data for one or more downstream ML models 101 (e.g., full-scale ML models such as but not limited to device (IoT device 103) failure prediction models).

In step 325, following the generation of the samples, i.e. ML-invariant samples, training and testing samples, any downstream AI/ML model 101 can be trained for a suited application using the training and testing samples. By way of example, the ML model 101, e.g. the ML model 211, can include, but is not limited to random forest, SVM, Multi-layer perceptron, artificial neural network, deep neural network (DNN), autoencoder, reinforcement learning network, generative adversarial network, etc. or any combination thereof. The ML model can also include any kind of feature-processing techniques, e.g. feature selection. In one embodiment, the output module 207 of the analytics platform 111 provides training and testing samples that have optimized representations (e.g., based on optimized time windows) and are usable by any downstream AI/ML method and does not specify which method should be used. In one embodiment, multiple AI/ML methods can be applied to the same samples, and the one that yields the best predictive performance can be selected.

With the approach of the embodiments described herein, expert input can be obviated in determining decisive hyper-parameters (e.g., observation, look-ahead, look-behind, and/or expectation window lengths). As discussed, in one embodiment, the system 100 leverages ML models, such as the budgeted or lean ML models, to works with the asynchronous multi-variate sensor data streams to set the one or more window lengths to generate supportive data samples, thus increasing the effectiveness of the downstream AI/ML methods used in event prediction (e.g., device failure prediction and/or root cause analysis). Furthermore, the various embodiments described herein help to reduce the complexity for predicting failures on a local device (e.g., IoT device 103) with limited computational resources (e.g., the one or more example embodiments reduces application complexity because of optimized window lengths), so that data does not need to be collected and transferred in a central place (e.g., a server). The various embodiments simply apply the optimized process observing data patterns using optimized time windows lengths.

FIG. 9 is a diagram of a user interface 901 for optimizing time windows for event prediction, according to one example embodiment. In the example of FIG. 9, the analytics platform 111 presents the user interface 901 as part of an initialization process for optimizing sample time windows (e.g., observation time window, look-ahead time window, and expectation time window) for predicting failure of IoT devices 103. As shown, the user interface 901 provides user interface elements for specifying constraints for one or more of the observation, look-ahead, and expectation time windows. The user has an option to keep the time window unbounded or to specify a constraint value. In this example, the user has left the observation and expectation time windows unbounded (e.g., meaning that the time windows will be fully determined or optimized based iterative searching over the dataset as described herein), but has specified a value for the look-ahead time window of 7 days.

This means, for instance, that the user wants at least 7 days between the observation and expectation windows so that the user has enough time for resource allocation to address any predicted event (e.g., device failure). The use can then initiate optimization of the time windows based on the input constraints (e.g., by clicking on the option to "Optimize Windows"). The analytics platform 111 will then initiate an iterative search over the search space of observation, look-ahead, and expectation window lengths to optimize sample quality (e.g., maximize sample cohesion with respect to the corresponding event). In this case, the search space can exclude any values of the look-ahead window lengths less than 7 days to optimize the time windows according to the embodiments described herein.

Predictive analytics for an IoT use case can lead to increased up-time or device availability. Generally, the IoT devices 103 (or any other communications device, sensor and/or UE 105 in general) can be used for remote sensing, data analysis, tracking, etc. across a variety of use cases. For example, in an Industrial IoT (IIoT) use case, IoT devices 103 can be installed in industrial equipment, production lines, etc. to monitor industrial processes. Because of the critical nature of some of these processes (e.g., health, safety, environment, etc. monitoring), IIoT often have different requirements concerning reliability and availability of the IoT devices 103 (or the one or more UEs 105 contained therein) as compared to the enhanced Mobile BroadBand (eMBB) market. As a result, it is expected that IoT devices 103 with multiple UEs 105 will be commonly used for IIOT use cases similar to how most Ethernet based critical equipment today have multiple Network Interface Controller (NIC) cards.

In many cases, the IoT devices 103 (e.g., when used in IIoT applications or other equivalent use cases) may be required to have operational lifetimes in excess of 10 years while also being subject to environmental impacts of chemicals, dust, humidity, temperature, etc. Moreover, as they are often a part of a larger industrial production, each IoT device 103 may not be easily replaceable at any time without a major impact to remaining production. As a result, predictive analytics can provide advance warning of the failure of IoT devices 103 to avoid potential downtime.

The processes described herein for providing sample representation for event prediction may be advantageously implemented via circuitry, software, hardware (e.g., general processor, Digital Signal Processing (DSP) chip, an Application Specific Integrated Circuit (ASIC), Field Programmable Gate Arrays (FPGAs), etc.), firmware or a combination thereof. As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device. Such exemplary hardware for performing the described functions is detailed below.

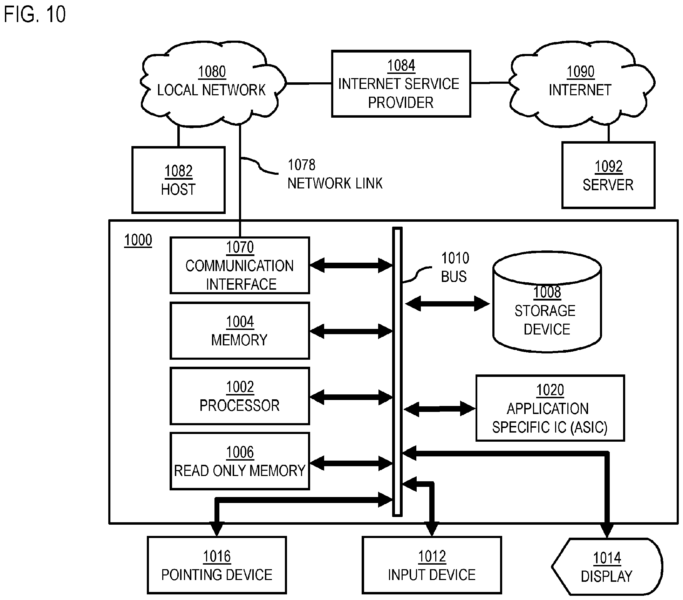

FIG. 10 illustrates a computer system 1000, such as the computer system 100, upon which an example embodiment of the invention may be implemented. Computer system 1000 is programmed (e.g., via computer program code or instructions) to provide sample representation for event prediction as described herein and includes a communication mechanism such as a bus 1010 for passing information between other internal and external components of the computer system 1000. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1010 includes one or more parallel conductors of information so that information is transferred quickly among devices coupled to the bus 1010. One or more processors 1002 for processing information are coupled with the bus 1010.

A processor 1002 performs a set of operations on information as specified by computer program code related to providing sample representation for event prediction. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1010 and placing information on the bus 1010. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 1002, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1000 also includes a memory 1004 coupled to bus 1010. The memory 1004, such as a random access memory (RAM) or other dynamic storage device, stores information including processor instructions for providing sample representation for event prediction. Dynamic memory allows information stored therein to be changed by the computer system 1000. RAM allows a unit of information stored at a location called a memory address to be stored and retrieved independently of information at neighboring addresses. The memory 1004 is also used by the processor 1002 to store temporary values during execution of processor instructions. The computer system 1000 also includes a read only memory (ROM) 1006 or other static storage device coupled to the bus 1010 for storing static information, including instructions, that is not changed by the computer system 1000. Some memory is composed of volatile storage that loses the information stored thereon when power is lost. Also coupled to bus 1010 is a non-volatile (persistent) storage device 1008, such as a magnetic disk, optical disk or flash card, for storing information, including instructions, that persists even when the computer system 1000 is turned off or otherwise loses power.

Information, including instructions for providing sample representation for event prediction, is provided to the bus 1010 for use by the processor from an external input device 1032, such as a keyboard containing alphanumeric keys operated by a human user, or a sensor. A sensor detects conditions in its vicinity and transforms those detections into physical expression compatible with the measurable phenomenon used to represent information in computer system 1000. Other external devices coupled to bus 1010, used primarily for interacting with humans, include a display device 1034, such as a cathode ray tube (CRT) or a liquid crystal display (LCD), or plasma screen or printer for presenting text or images, and a pointing device 1036, such as a mouse or a trackball or cursor direction keys, or motion sensor, for controlling a position of a small cursor image presented on the display 1014 and issuing commands associated with graphical elements presented on the display 1014. In some embodiments, for example, in embodiments in which the computer system 1000 performs all functions automatically without human input, one or more of external input device 1032, display device 1034 and pointing device 1036 is omitted.

In the illustrated embodiment, special purpose hardware, such as an application specific integrated circuit (ASIC) 1020, is coupled to bus 1010. The special purpose hardware is configured to perform operations not performed by processor 1002 quickly enough for special purposes. Examples of application specific ICs include graphics accelerator cards for generating images for display 1014, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1000 also includes one or more instances of a communications interface 1070 coupled to bus 1010. Communication interface 1070 provides a one-way or two-way communication coupling to a variety of external devices that operate with their own processors, such as printers, scanners and external disks. In general the coupling is with a network link 1078 that is connected to a local network 1080 to which a variety of external devices with their own processors are connected. For example, communication interface 1070 may be a parallel port or a serial port or a universal serial bus (USB) port on a personal computer. In some embodiments, communications interface 1070 is an integrated services digital network (ISDN) card or a digital subscriber line (DSL) card or a telephone modem that provides an information communication connection to a corresponding type of telephone line. In some embodiments, a communication interface 1070 is a cable modem that converts signals on bus 1010 into signals for a communication connection over a coaxial cable or into optical signals for a communication connection over a fiber optic cable. As another example, communications interface 1070 may be a local area network (LAN) card to provide a data communication connection to a compatible LAN, such as Ethernet. Wireless links may also be implemented. For wireless links, the communications interface 1070 sends or receives or both sends and receives electrical, acoustic or electromagnetic signals, including infrared and optical signals, that carry information streams, such as digital data. For example, in wireless handheld devices, such as mobile telephones like cell phones, the communications interface 1070 includes a radio band electromagnetic transmitter and receiver called a radio transceiver. In certain embodiments, the communications interface 1070 enables connection to the communication network 113 for providing sample representation for event prediction.

The term computer-readable medium is used herein to refer to any medium that participates in providing information to processor 1002, including instructions for execution. Such a medium may take many forms, including, but not limited to, non-volatile media, volatile media and transmission media. Non-volatile media include, for example, optical or magnetic disks, such as storage device 1008. Volatile media include, for example, dynamic memory 1004. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1078 typically provides information communication using transmission media through one or more networks to other devices that use or process the information. For example, network link 1078 may provide a connection through local network 1080 to a host computer 1082 or to equipment 1084 operated by an Internet Service Provider (ISP). ISP equipment 1084 in turn provides data communication services through the public, world-wide packet-switching communication network of networks now commonly referred to as the Internet 1090.

A computer called a server host 1092 connected to the Internet hosts a process that provides a service in response to information received over the Internet. For example, server host 1092 hosts a process that provides information representing video data for presentation at display 1014. It is contemplated that the components of system can be deployed in various configurations within other computer systems, e.g., host 1082 and server 1092.

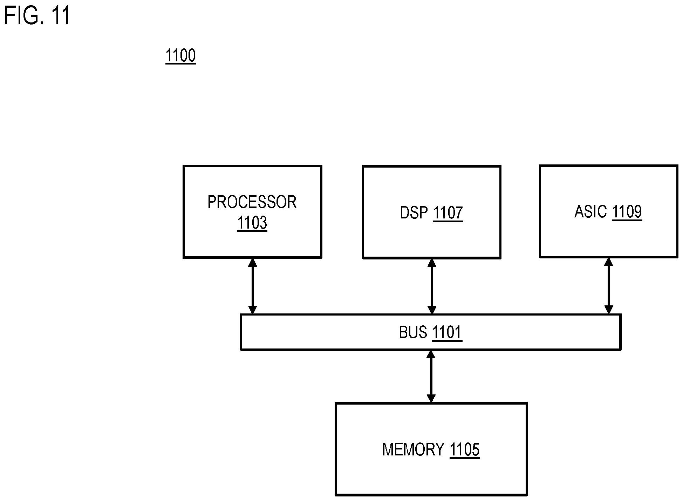

FIG. 11 illustrates a chip set 1100 upon which an example embodiment of the invention may be implemented. Chip set 1100 is programmed to provide sample representation for event prediction as described herein and includes, for instance, the processor and memory components described with respect to FIG. 10 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1100 includes a communication mechanism such as a bus 1101 for passing information among the components of the chip set 1100. A processor 1103 has connectivity to the bus 1101 to execute instructions and process information stored in, for example, a memory 1105. The processor 1103 may include one or more processing cores with each core configured to perform independently. A multi-core processor enables multiprocessing within a single physical package. Examples of a multi-core processor include two, four, eight, or greater numbers of processing cores. Alternatively or in addition, the processor 1103 may include one or more microprocessors configured in tandem via the bus 1101 to enable independent execution of instructions, pipelining, and multithreading. The processor 1103 may also be accompanied with one or more specialized components to perform certain processing functions and tasks such as one or more digital signal processors (DSP) 1107, or one or more application-specific integrated circuits (ASIC) 1109. A DSP 1107 typically is configured to process real-world signals (e.g., sound) in real time independently of the processor 1103. Similarly, an ASIC 1109 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1103 and accompanying components have connectivity to the memory 1105 via the bus 1101. The memory 1105 includes both dynamic memory (e.g., RAM, magnetic disk, writable optical disk, etc.) and static memory (e.g., ROM, CD-ROM, etc.) for storing executable instructions that when executed perform the inventive steps described herein to provide sample representation for event prediction. The memory 1105 also stores the data associated with or generated by the execution of the inventive steps.

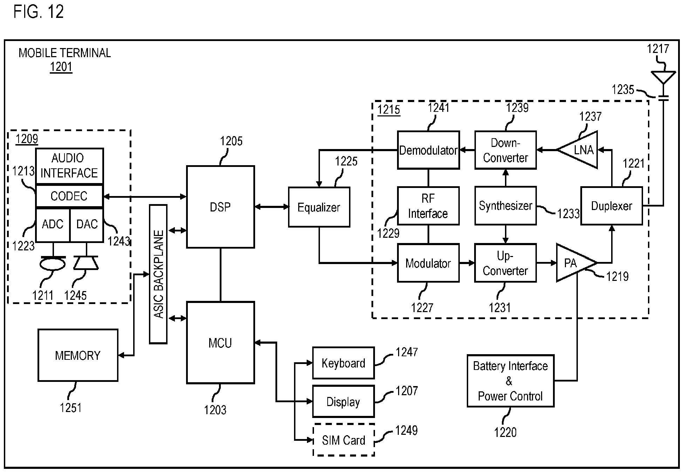

FIG. 12 is a diagram of exemplary components, for example, of the IoT device 103, UE device 105, any sensor device, analytics platform 111, vehicle electronic control unit (ECU), or mobile terminal (e.g., handset), or any combination thereof, capable of operating in the system of FIG. 1, according to one example embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1203, a Digital Signal Processor (DSP) 1205, and a receiver/transmitter unit including a microphone gain control unit and a speaker gain control unit. A main display unit 1207 provides a display to the user in support of various applications and mobile station functions that offer automatic contact matching. An audio function circuitry 1209 includes a microphone 1211 and microphone amplifier that amplifies the speech signal output from the microphone 1211. The amplified speech signal output from the microphone 1211 is fed to a coder/decoder (CODEC) 1213.

A radio section 1215 amplifies power and converts frequency in order to communicate with a base station, which is included in a mobile communication system, via antenna 1217. The power amplifier (PA) 1219 and the transmitter/modulation circuitry are operationally responsive to the MCU 1203, with an output from the PA 1219 coupled to the duplexer 1221 or circulator or antenna switch, as known in the art. The PA 1219 also couples to a battery interface and power control unit 1220.

In use, a user of mobile station 1201 speaks into the microphone 1211 and his or her voice along with any detected background noise is converted into an analog voltage. The analog voltage is then converted into a digital signal through the Analog to Digital Converter (ADC) 1223. The control unit 1203 routes the digital signal into the DSP 1205 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 1225 for compensation of any frequency-dependent impairments that occur during transmission though the air such as phase and amplitude distortion. After equalizing the bit stream, the modulator 1227 combines the signal with a RF signal generated in the RF interface 1229. The modulator 1227 generates a sine wave by way of frequency or phase modulation. In order to prepare the signal for transmission, an up-converter 1231 combines the sine wave output from the modulator 1227 with another sine wave generated by a synthesizer 1233 to achieve the desired frequency of transmission. The signal is then sent through a PA 1219 to increase the signal to an appropriate power level. In practical systems, the PA 1219 acts as a variable gain amplifier whose gain is controlled by the DSP 1205 from information received from a network base station. The signal is then filtered within the duplexer 1221 and optionally sent to an antenna coupler 1235 to match impedances to provide maximum power transfer. Finally, the signal is transmitted via antenna 1217 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1201 are received via antenna 1217 and immediately amplified by a low noise amplifier (LNA) 1237. A down-converter 1239 lowers the carrier frequency while the demodulator 1241 strips away the RF leaving only a digital bit stream. The signal then goes through the equalizer 1225 and is processed by the DSP 1205. A Digital to Analog Converter (DAC) 1243 converts the signal and the resulting output is transmitted to the user through the speaker 1245, all under control of a Main Control Unit (MCU) 1203-which can be implemented as a Central Processing Unit (CPU) (not shown).

The MCU 1203 receives various signals including input signals from the keyboard 1247. The keyboard 1247 and/or the MCU 1203 in combination with other user input components (e.g., the microphone 1211) comprise a user interface circuitry for managing user input. The MCU 1203 runs a user interface software to facilitate user control of at least some functions of the mobile station 1201 to provide sample representation for event prediction. The MCU 1203 also delivers a display command and a switch command to the display 1207 and to the speech output switching controller, respectively. Further, the MCU 1203 exchanges information with the DSP 1205 and can access an optionally incorporated SIM card 1249 and a memory 1251. In addition, the MCU 1203 executes various control functions required of the station. The DSP 1205 may, depending upon the implementation, perform any of a variety of conventional digital processing functions on the voice signals. Additionally, DSP 1205 determines the background noise level of the local environment from the signals detected by microphone 1211 and sets the gain of microphone 1211 to a level selected to compensate for the natural tendency of the user of the mobile station 1201.

The CODEC 1213 includes the ADC 1223 and DAC 1243. The memory 1251 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1251 may be, but not limited to, a single memory, CD, DVD, ROM, RAM, EEPROM, optical storage, or any other non-volatile or non-transitory storage medium capable of storing digital data.

An optionally incorporated SIM card 1249 carries, for instance, important information, such as the cellular phone number, the carrier supplying service, subscription details, and security information. The SIM card 1249 serves primarily to identify the mobile station 1201 on a radio network. The card 1249 also contains a memory for storing a personal telephone number registry, text messages, and user specific mobile station settings.

While the invention has been described in connection with a number of example embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

## Claims

1. An apparatus comprising means for:

   determining a random set of sliding time window lengths of one or more time windows for processing a sensor data stream to detect an event;
   causing, at least in part, a generation of a plurality of sensor data samples based on the random set of the sliding time window lengths and the sensor data stream;
   causing, at least in part, an evaluation of the plurality of data samples based on a quality metric, wherein the quality metric indicates a level of sample cohesion relative to the event; and
   selecting a combination of the sliding time window lengths of the one or more window lengths based on the evaluation,
   wherein the selected combination of the sliding time window lengths is used to process the sensor data to detect the event.

**2.** The apparatus of claim 1, wherein the one or more time windows include at least one of:

an observation time window representing how long to observe the sensor data stream to detect the event;
a look-ahead window representing how far ahead into the future to predict the event to facilitate a resource allocation to address the event;
a look-behind window representing how far back into the past to predict the event; and
an expectation window representing a time window in which the event is to be predicted.

**3.** The apparatus of claims 1 or 2, wherein the means are further configured to perform:

causing, at least in part, a generation of an N-dimensional search space,
wherein N is a number of the one or more time windows that are processed; and
wherein the random set of sliding time windows is determined based on the N-dimensional search space.

**4.** The apparatus of claim 3, wherein the N-dimensional search space is bounded by a time interval between two or more data points of the sensor data stream.

**5.** The apparatus of any of claims 1 to 4, wherein the evaluation is performed using a budgeted machine learning process.

**6.** The apparatus of any of claims 1 to 5, wherein the means are further configured to perform:

setting the combination of the sliding window lengths as a global maxima;
defining a new search space within a proximity threshold of the global maxima;
determining another random set of the sliding window lengths in the new search space; and
causing an iterative evaluation of the another random set of sliding window lengths in the new search space to determine the global maxima.

**7.** The apparatus of any of claims 1 to 6, wherein the means are further configured to perform:
causing, at least in part, a generation of one or more training samples, one or more testing samples, or a combination based on the combination of the sliding time window lengths.

**8.** The apparatus of claim 7, wherein the means are further configured to perform:
causing, at least in part, a training or a testing of a machine learning model to detect the event based on the one or more training samples, the one or more testing samples, or a combination thereof.

**9.** The apparatus of any preceding claim, wherein the event is a device failure event.

**10.** The apparatus of any preceding claim, wherein the sliding time window lengths, the one or more windows, or combination thereof are determined based on the event, a type of the event, or a combination thereof.

**11.** A method comprising:

determining a random set of sliding time window lengths of one or more time windows for processing a sensor data stream to detect an event;
causing, at least in part, a generation of a plurality of sensor data samples based on the random set of the sliding time window lengths and the sensor data stream;
causing, at least in part, an evaluation of the plurality of data samples based on a quality metric, wherein the quality metric indicates a level of sample cohesion relative to the event; and
selecting a combination of the sliding time window lengths of the one or more window lengths based on the evaluation,
wherein the selected combination of the sliding time window lengths is used to process the sensor data to detect the event.

**12.** The method of claim 11, wherein the one or more time windows include at least one of:

an observation time window representing how long to observe the sensor data stream to detect the event;
a look-ahead window representing how far ahead into the future to predict the event to facilitate a resource allocation to address the event;

a look-behind window representing how far back into the past to predict the event; and
an expectation window representing a time window in which the event is to be predicted.

13. The method of claims 11 or 12, wherein the means are further configured to perform:

causing, at least in part, a generation of an N-dimensional search space,
wherein N is a number of the one or more time windows are processed; and
wherein the random set of sliding time windows is determined based on the N-dimensional search space.

14. The method of any of claims 11 to 13, wherein the means are further configured to perform:

setting the combination of the sliding window lengths as a global maxima;
defining a new search space within a proximity threshold of the global maxima;
determining another random set of the sliding window lengths in the new search space; and
causing an iterative evaluation of the another random set of sliding window lengths in the new search space to
determine the global maxima.

15. A computer program comprising instructions for causing an apparatus to perform at least the following:

determining a random set of sliding time window lengths of one or more time windows for processing a sensor
data stream to detect an event;
causing, at least in part, a generation of a plurality of sensor data samples based on the random set of the
sliding time window lengths and the sensor data stream;
causing, at least in part, an evaluation of the plurality of data samples based on a quality metric, wherein the
quality metric indicates a level of sample cohesion relative to the event; and
selecting a combination of the sliding time window lengths of the one or more window lengths based on the
evaluation,
wherein the selected combination of the sliding time window lengths is used to process the sensor data to detect
the event.

FIG. 1                                                                                                    100

| IOT DEVICE 103a | IOT DEVICE 103b | IOT DEVICE 103n |
|---|---|---|
| UE 105a | UE 105d | UE 105g |
| ⋮ | ⋮ | ⋮ |
| UE 105c | UE 105f | UE 105m |

...

HEALTH DATA 107 → ANALYTICS PLATFORM 111 → EVENT PREDICTION DATA 109

ML MODEL 101a
⋮
ML MODEL 101k

COMMUNICATIONS NETWORK 113

BASE STATION 115a ... BASE STATION 115j

CONTENT PROVIDER 121a

CONTENT PROVIDER 121u

SERVICES PLATFORM 117

SERVICE 119a
⋮
SERVICE 119j

FIG. 2

ANALYTICS PLATFORM 111

DATA MODULE
201

SEARCH MODULE
203

EVALUATION MODULE
205

OUTPUT MODULE
207

ML MODELS 101

BUDGETED ML
MODELS
209

EXHAUSTIVE ML
MODELS
211

FIG. 3

300

SENSOR DATA — 301

303 — SET INITIAL STATE

DETERMINE SEARCH SPACE — 305

GENERATE RANDOM SET OF WINDOWS — 307

319 — DEFINE SUB-SEARCH SPACE

GENERATE SAMPLES FOR EACH WINDOW COMBINATION — 309

EVALUATE SAMPLE QUALITY (E.G., USING BUDGETED-ML) — 311

317 — UPDATE STATE

FIND GLOBAL MAXIMA — 313

315 — QUALITY IMPROVED?

321 — FOUND OPTIMAL WINDOWS

GENERATE TRAIN AND TEST SAMPLES — 323

EVENT PRED MODEL — 325

FIG. 4A

◆ = NORMAL EVENT 401

◊ = FAILURE EVENT 403

SENSOR DATA STREAM 405

FIG. 4B

◆ = NORMAL EVENT 401

◊ = FAILURE EVENT 403

OBSERVATION WINDOW 423　　EXPECTATION WINDOW 427

CURRENT TIME 421

LOOK-AHEAD WINDOW 425

SENSOR DATA STREAM 405

FIG. 5

FIG. 6

LOOK-AHEAD WINDOW <u>425</u>

OBSERVATION WINDOW <u>423</u>    EXPECTATION WINDOW <u>427</u>

◆ = NORMAL EVENT <u>401</u>

◇ = FAILURE EVENT <u>403</u>

609

607a

607b

SENSOR DATA STREAM <u>401</u>

$\langle x_1, x_2, \ldots, x_d \rangle$ $\langle 0,1 \rangle$ ◄—— SAMPLE <u>601</u>

DATA <u>603</u>    LABEL <u>605</u>

FIG. 7A

FIG. 7B

EXPECTATION 427

SEARCH SPACE 501

LOOK-AHEAD 425

OBSERVATION 423

EXPECTATION 427

SEARCH SPACE 501

721

LOOK-AHEAD 425

OBSERVATION 423

FIG. 8

SUB-SEARCH SPACE <u>801</u>

EXPECTATION <u>427</u>

LOOK-AHEAD <u>425</u>

721

OBSERVATION <u>423</u>

EXPECTATION <u>427</u>

SEARCH SPACE <u>501</u>

721

LOOK-AHEAD <u>425</u>

OBSERVATION <u>423</u>

FIG. 9

901

OPTIMIZATION OF TIME WINDOWS FOR PREDICTION ANALYTICS

SELECT OPTIMIZATION CONSTRAINTS FOR THE FOLLOWING TIME WINDOWS:

- OBSERVATION TIME WINDOW:
  ■ UNBOUNDED
  ☐ SPECIFY VALUE: [          ]

- LOOK-AHEAD TIME WINDOW:
  ☐ UNBOUNDED
  ■ SPECIFY VALUE: [   7 DAYS   ]

- OBSERVATION TIME WINDOW:
  ■ UNBOUNDED
  ☐ SPECIFY VALUE: [          ]

[ OPTIMIZE WINDOWS ]

FIG. 10

FIG. 11

<u>1100</u>

FIG. 12

Europäisches
Patentamt

European
Patent Office

Office européen
des brevets

# EUROPEAN SEARCH REPORT

Application Number

EP 21 15 0465

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAVARRO GONZALEZ JOSE MANUEL ET AL: "Optimizing Failure Prediction Time Windows Through Genetic Algorithms and Random Forests", IEEE ACCESS, vol. 6, 31 October 2018 (2018-10-31), pages 58307-58323, XP011694012, DOI: 10.1109/ACCESS.2018.2874440 [retrieved on 2018-10-30] * abstract * * page 58307, left-hand column, paragraph 1 - right-hand column, paragraph 1 * * page 58308, right-hand column, paragraph 4 - last line * * page 58310, right-hand column, paragraph 3 - page 58311, left-hand column, paragraph 3; figure 3 * ----- | 1-15 | INV. G06N20/00 |
| X | US 2017/193395 A1 (LIMONAD LIOR [IL] ET AL) 6 July 2017 (2017-07-06) * paragraphs [0016], [0017], [0023], [0031], [0033], [0037], [0061]; figures 1-4 * ----- | 1,2,7,8, 10-12,15 | |

TECHNICAL FIELDS
SEARCHED (IPC)

G06N
G06F

The present search report has been drawn up for all claims

| Place of search | Date of completion of the search | Examiner |
|---|---|---|
| The Hague | 7 May 2021 | Fournier, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 848 859 A1**

## ANNEX TO THE EUROPEAN SEARCH REPORT
## ON EUROPEAN PATENT APPLICATION NO.

EP 21 15 0465

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2021

| Patent document cited in search report | Publication date | Patent family member(s) | Publication date |
|---|---|---|---|
| US 2017193395 A1 | 06-07-2017 | NONE | |

For more details about this annex : see Official Journal of the European Patent Office, No. 12/82

EPO FORM P0459

33